# FASCICULE DE BREVET EUROPEEN

(11) **EP 4 121 626 B1**
(45) Date de publication et mention de la délivrance du brevet: **24.04.2024**
(21) Numéro de dépôt: 21712532.7
(22) Date de dépôt: 19.03.2021
(51) Int. Cl.: E06B 9/88

(54) **PROCÉDÉ DE DÉTECTION D'UN OBSTACLE, ACTIONNEUR ÉLECTROMÉCANIQUE ET INSTALLATION DE FERMETURE OU DE PROTECTION SOLAIRE**
VERFAHREN ZUR ERKENNUNG EINES HINDERNISSES, ELEKTROMECHANISCHER AKTUATOR UND SCHLIESS- ODER SONNENSCHUTZEINHEIT
METHOD FOR DETECTING AN OBSTACLE, ELECTROMECHANICAL ACTUATOR AND CLOSURE OR SOLAR PROTECTION UNIT

(30) Priorité: 20.03.2020 FR 2002756
(43) Date de publication de la demande: 25.01.2023
(73) Titulaire: Somfy Activites SA, 74300 Cluses (FR)
(72) Inventeur: DARLOT, Arnaud, 74300 Cluses (FR); LAGARDE, Eric, 74300 Cluses (FR); MARAVAL, Frédéric, 74300 Cluses (FR); ROBERT, Héléna, 74300 Cluses (FR)
(74) Mandataire: Lavoix
(86) Numéro de dépôt international: PCT/EP2021/057120
(87) Numéro de publication internationale: WO 2021/186051

(56) Documents cités:
- EP-A1- 1 727 959
- EP-A1- 1 945 901
- EP-A2- 2 256 284
- WO-A1-2014/207387

## Description

La présente invention concerne un procédé de détection d'un obstacle, mis en oeuvre par un actionneur électromécanique dans une installation domotique de fermeture ou de protection solaire. La présente invention concerne également un actionneur électromécanique dans une installation domotique de fermeture ou de protection solaire, adapté à mettre en oeuvre ce procédé de détection d'obstacle.

De manière générale, la présente invention concerne le domaine des installations de fermeture ou de protection solaire, dans lequel il est connu d'utiliser un actionneur électromécanique de façon à automatiser la fermeture et l'ouverture d'un écran de fermeture, tel qu'un volet roulant ou un écran de protection solaire, tel qu'un store, notamment de façon à mettre en mouvement un écran entre au moins une première position et une deuxième position.

Un dispositif d'entraînement motorisé connu comprend un actionneur électromécanique d'entrainement d'un élément mobile de fermeture, d'occultation ou de protection solaire, tel qu'un volet, une porte, une grille, un store, ou tout autre matériel équivalent, appelé par la suite écran. En particulier, un tel actionneur électromécanique est placé à l'intérieur d'un tube d'enroulement et entraîne en rotation le tube d'enroulement sur lequel s'enroule l'écran.

L'invention est applicable à tout actionneur électromécanique comprenant un moteur électrique, qu'il soit à courant continu ou alternatif, synchrone ou asynchrone. L'invention est, particulièrement bien adaptée aux actionneurs électromécaniques comprenant un moteur électrique sans balais à commutation électronique ou, de manière plus générale, un moteur électrique « synchrone à aimants permanents ».

L'invention peut trouver son application dans le domaine de la domotique et/ou de l'immotique, par exemple pour des bâtiments à usage résidentiel, commercial ou industriel.

Le document EP2256284A enseigne d'utiliser deux capteurs à effet Hall pour détecter la position angulaire d'un aimant dans un dispositif d'entraînement d'un store. Ceci ne permet pas de détecter un obstacle sur le trajet du store.

Le document EP1945901 A1 décrit un actionneur électromécanique d'entraînement d'un volet roulant, comprenant un dispositif à jeu mécanique disposé entre un corps de l'actionneur et une tête de l'actionneur, elle-même destinée à supporter l'actionneur électromécanique de manière fixe sur une portion de bâtiment. Un dispositif de capteur est utilisé pour déterminer une variation angulaire entre le corps et la tête de l'actionneur, par rapport à une position initiale sous contrainte, cette position initiale étant liée au poids du volet. En effet, par exemple à la descente, lors de l'arrivée du volet sur un obstacle, la contrainte de poids du volet diminue. Le mouvement d'entraînement fourni par l'actionneur a alors tendance à rattraper le jeu angulaire. La variation angulaire correspondante est vue par le dispositif de capteur. Un dépassement d'un seuil de variation angulaire est interprété par l'actionneur électromécanique comme une présence d'un obstacle. En principe, l'entraînement motorisé est stoppé, voire le mouvement inversé pour libérer la contrainte sur l'obstacle.

D'autres solutions de détection d'obstacle sont également connues, par exemple basées sur l'analyse de la vitesse ou du courant moteur, mais celles-ci restent imprécises et extrêmement dépendantes des caractéristiques du moteur et de la charge entraînée.

Dans tous les cas, la détection de l'impact de l'obstacle passe par une chaîne cinématique importante qui rend complexe la détermination du seuil adapté à la détection d'obstacle.

C'est à ces inconvénients qu'entend plus particulièrement remédier l'invention en proposant un procédé de détection d'obstacle qui s'affranchit au moins en partie de l'impact de jeux dans la chaîne cinématique, du poids de l'écran, de la précision des capteurs ou de la détermination de seuils.

A cet égard, la présente invention vise, selon un premier aspect, un procédé de détection d'un obstacle s'opposant au mouvement d'un écran dans une installation domotique de fermeture ou de protection solaire comprenant un actionneur électromécanique pour l'entrainement du mouvement de l'écran, l'actionneur électromécanique comprenant un support de couple, un carter, un arbre de sortie, un moteur électrique comprenant un stator et un rotor, l'installation comprenant un arbre d'enroulement entraînant l'écran en rotation et un accessoire de liaison entre l'arbre de sortie de l'actionneur électromécanique et l'arbre d'enroulement, le procédé comprenant les étapes suivantes :
- détermination d'une valeur de déplacement angulaire du rotor par rapport au stator de l'actionneur électromécanique,
- détermination d'une valeur de déplacement angulaire de l'arbre d'enroulement par rapport au carter ou au support de couple de l'actionneur électromécanique,
- détermination d'une déformation angulaire de la chaîne cinématique entre le moteur électrique et l'arbre d'enroulement par comparaison entre ces deux valeurs de déplacement angulaire,
- détermination de la présence d'un obstacle au mouvement de l'écran à partir d'une déformation angulaire supérieure à une valeur prédéfinie de déformation angulaire.

Ainsi, on garantit une détection d'obstacle sans devoir ajouter inutilement du poids à l'écran. La combinaison de deux capteurs de moindre résolution permet une détermination rapide et efficace de la présence d'un obstacle.

Selon une caractéristique avantageuse de l'invention, le procédé comprend une étape de conversion (a) de la valeur de déplacement angulaire du rotor en une donnée de déplacement angulaire équivalente de l'arbre d'enroulement ou (b) de la valeur de déplacement angulaire de l'arbre d'enroulement par rapport au carter ou au support de couple de l'actionneur électromécanique en une donnée de déplacement angulaire équivalente du rotor.

Cette étape permet de convertir l'une des deux valeurs en une valeur équivalente comparable à l'autre.

Selon une caractéristique avantageuse de l'invention, la donnée de déplacement angulaire équivalente est obtenue en divisant la valeur de déplacement angulaire du rotor par le rapport de réduction théorique d'un réducteur de l'actionneur électromécanique, le rapport de réduction étant un nombre supérieur à 1 ou, inversement, en multipliant la valeur de déplacement angulaire de l'arbre d'enroulement par le rapport de réduction théorique du réducteur de l'actionneur électromécanique.

Avantageusement, le procédé comprend une étape de traitement et de filtrage d'un signal de comparaison obtenu à partir du signal de déplacement angulaire du rotor et du signal de déplacement angulaire de l'arbre d'enroulement.

Selon une caractéristique avantageuse de l'invention, le procédé comprend une étape d'apprentissage de la valeur prédéfinie de déformation angulaire en fonction de données d'écart de déformation angulaire et/ou de temps de déclenchement de ces écarts mesurés lors d'un cycle d'apprentissage.

Selon une autre caractéristique avantageuse de l'invention, l'arrivée dans des positions extrêmes de l'écran est gérée par comparaison de la valeur de déplacement angulaire de l'arbre d'enroulement par rapport à une valeur de déplacement prédéfinie.

La présente invention vise, selon un deuxième aspect, un actionneur électromécanique comprenant un support de couple, un carter, un moteur électrique comprenant un stator et un rotor et un arbre de sortie, en prise en rotation avec un arbre d'enroulement par l'intermédiaire d'un accessoire de liaison, l'actionneur électromécanique étant caractérisé en ce qu'il comprend en outre un premier dispositif de détection de position, adapté à définir une position angulaire du rotor et un deuxième dispositif de détection de position, adapté à définir une position angulaire de l'arbre d'enroulement en prise en rotation avec l'arbre de sortie et une unité électronique de contrôle adaptée à traiter les données issues des deux dispositifs de détection de position de sorte à mettre en oeuvre le procédé mentionné ci-dessus.

Selon une caractéristique avantageuse de l'invention, l'arbre d'enroulement est un tube d'enroulement dans lequel est inséré au moins partiellement l'actionneur électromécanique, celui-ci comprenant une couronne-palier en rotation autour du carter par rapport au support de couple et en prise en rotation avec le tube d'enroulement, le deuxième dispositif de détection de position étant adapté à déterminer la rotation de la couronne-palier par rapport au support de couple de l'actionneur électromécanique.

Selon une autre caractéristique avantageuse de l'invention, la couronne-palier comprend au moins deux secteurs magnétiques répartis régulièrement sur un pourtour ou une face en vis à vis d'un dispositif de capteur magnétique disposé dans le carter de l'actionneur électromagnétique.

Avantageusement, l'actionneur électromécanique comprend un élément de déformation placé sur la chaîne cinématique entre le rotor et l'arbre d'enroulement, comprenant une partie amont et une partie aval, mobiles en rotation l'une par rapport à l'autre et comprenant un dispositif élastique s'opposant au mouvement de rotation des parties amont et aval.

Ce dispositif élastique peut comprendre une barre de torsion.

Dans ce cas, il peut être prévu que le dispositif élastique comprend une tige centrale et deux pignons rapportés aux extrémités de la tige centrale et en prise avec des dentures internes des parties amont et aval.

De préférence, l'actionneur électromécanique comprend un moteur électrique synchrone à aimants permanents, à commutation électronique.

Selon une caractéristique avantageuse de l'invention, seul le deuxième dispositif de détection, parmi les deux dispositifs de détection de position angulaire comprend des capteurs physiques, notamment des capteurs magnétiques, pour la détermination de position angulaire.

La présente invention vise, selon un troisième aspect, une installation de fermeture ou de protection solaire comprenant un écran, un arbre d'enroulement et un actionneur électromécanique en prise en rotation avec l'arbre d'enroulement, l'actionneur électromécanique étant tel que mentionné ci-dessus.

L'invention sera mieux comprise et d'autres avantages de celle-ci apparaîtront plus clairement à la lumière de la description qui va suivre d'un mode de réalisation d'un procédé de détection d'un obstacle, de trois modes de réalisation d'un actionneur électromécanique configuré pour mettre en oeuvre le procédé de détection d'obstacle et d'une installation de fermeture ou de protection solaire comprenant un tel actionneur, donnée uniquement à titre d'exemple et faite en se référant aux dessins annexés dans lesquels :
[Fig.1] la figure 1 est une coupe schématique transversale d'une installation conforme à un mode de réalisation de l'invention ;
[Fig.2] la figure 2 est une vue schématique en perspective de l'installation illustrée à la figure 1 ;
[Fig.3] la figure 3 est une coupe schématique d'un actionneur électromécanique de l'installation illustrée aux figures 1 et 2, selon un plan de coupe passant par un axe de rotation d'un arbre de sortie de l'actionneur électromécanique ;
[Fig.4] la figure 4 est un schéma électrique d'un moteur électrique appartenant à l'actionneur électromécanique de la figure 3 et de son environnement, cet actionneur comprenant un premier dispositif de détection de position conforme à un premier mode de réalisation ;
[Fig. 5] la figure 5 est une vue schématique d'un deuxième mode de réalisation du premier dispositif de détection de position appartenant à l'actionneur électromécanique de la figure 3 ;
[Fig. 6] la figure 6 est une vue schématique d'un premier mode de réalisation d'un deuxième dispositif de détection de position appartenant à l'actionneur électromécanique de la figure 3 ;
[Fig. 7] la figure 7 est une vue schématique d'un deuxième mode de réalisation du deuxième dispositif de détection de position appartenant à l'actionneur électromécanique de la figure 3 ;
[Fig. 8] la figure 8 illustre plusieurs graphiques montrant l'évolution de paramètres surveillés dans l'actionneur électromécanique de la figure 3 lors de la mise en oeuvre du procédé selon l'invention ;

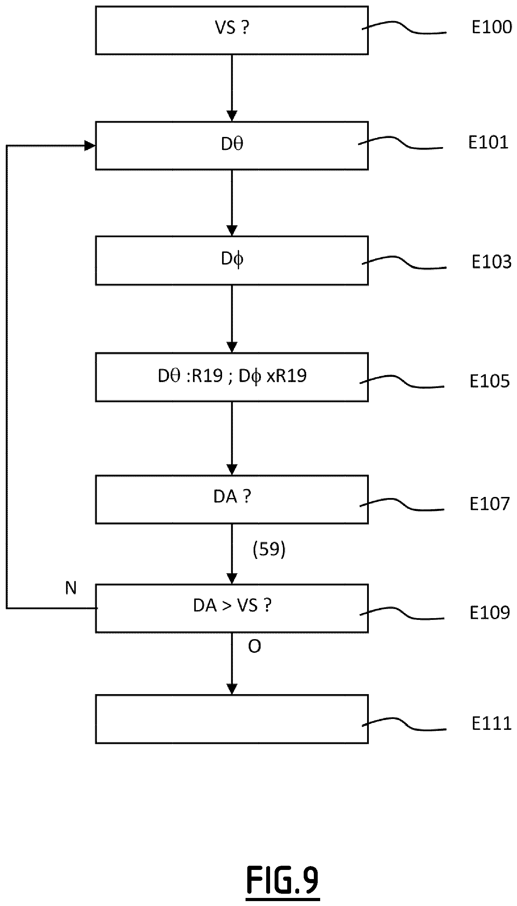

[Fig. 9] la figure 9 est un diagramme schématique montrant certaines étapes d'un procédé mis en oeuvre par l'actionneur électromécanique de la figure 3 selon l'invention ;
[Fig.10] la figure 10 est une vue schématique en perspective d'un accessoire de l'actionneur électromécanique de la figure 3 ;
[Fig.11] la figure 11 est une coupe schématique en perspective de l'accessoire de la figure 10, suivant un plan de coupe passant par l'axe de rotation de l'arbre de sortie de l'actionneur électromécanique ;
[Fig.12] la figure 12 est une coupe schématique en perspective de l'accessoire de la figure 10 suivant un plan de coupe orthogonal à l'axe de rotation de l'arbre de sortie de l'actionneur électromécanique ;
[Fig.13] la figure 13 est une vue schématique en perspective d'une variante d'un accessoire de l'actionneur électromécanique de la figure 3 ;
[Fig.14] la figure 14 est une vue en perspective éclatée d'une autre variante d'un accessoire de l'actionneur électromécanique de la figure 3 ;
[Fig.15] la figure 15 est coupe schématique longitudinale en perspective de l'accessoire de la figure 14, suivant un plan de coupe passant par l'axe de rotation de l'arbre de sortie de l'actionneur électromécanique ;
[Fig.16] la figure 16 est une vue en perspective, à plus grand échelle d'un élément déformable de l'accessoire des figures 14 et 15 ; et
[Fig.17] la figure 17 est une coupe en perspective dans le plan XVII à la figure 15, en considérant que l'accessoire n'est pas coupé longitudinalement sur cette figure.

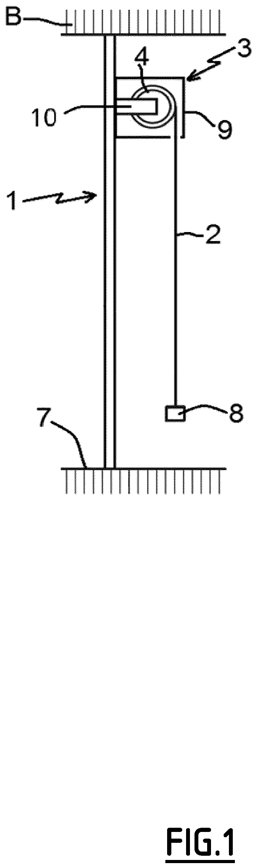

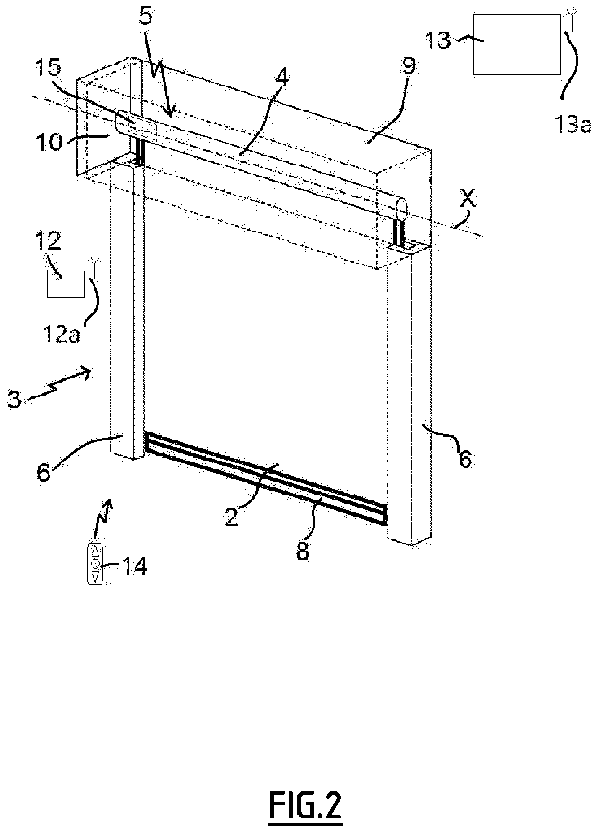

On va décrire tout d'abord, en référence aux figures 1 et 2, une installation domotique 100 conforme à l'invention et installée dans un bâtiment B comportant une ouverture 1, fenêtre ou porte, équipée d'un écran 2 appartenant à un dispositif d'occultation 3, en particulier un store enroulable motorisé.

Le dispositif d'occultation 3 peut être alternativement un volet roulant, un store avec des lames orientables, ou encore une porte enroulable. En pratique, la présente invention s'applique à tous les types de dispositif d'occultation comprenant un arbre d'enroulement motorisé en rotation.

On va décrire, en référence aux figures 1 à 3, un store motorisé conforme à un mode de réalisation de l'invention.

L'écran 2 du dispositif d'occultation 3 est enroulé sur un arbre d'enroulement 4, prévu sous la forme d'un tube d'enroulement, entraîné par un dispositif d'entraînement motorisé 5. L'écran 2 est mobile entre une position enroulée, en particulier haute, et une position déroulée, en particulier basse.

Le dispositif d'entraînement motorisé 5 comprend un actionneur électromécanique 11, en particulier de type tubulaire, permettant de mettre en rotation le tube d'enroulement 4 de sorte à dérouler ou enrouler l'écran 2 du dispositif d'occultation 3.

Le dispositif d'occultation 3 comprend le tube d'enroulement 4 pour enrouler l'écran 2. Dans l'état monté de l'installation domotique 100, l'actionneur électromécanique 11 est inséré dans le tube d'enroulement 4.

L'actionneur électromécanique 11 et le tube d'enroulement 4 sont tous deux positionnés de manière coaxiale le long d'un axe longitudinal X. Le diamètre intérieur du tube d'enroulement 4 est sensiblement équivalent au diamètre externe de l'actionneur électromécanique 11, de sorte que l'actionneur électromécanique 11 peut être inséré dans le tube d'enroulement 4 lors de l'assemblage du dispositif d'occultation 3.

De manière connue, l'écran 2 du volet roulant 3 est formé par une toile, laquelle s'accroche par une première extrémité, au tube d'enroulement et par l'autre extrémité à une barre lestée 8.

La position haute enroulée de l'écran correspond à la position de la barre lestée au niveau du tube d'enroulement et la position basse déroulée correspond à la position de la barre lestée 8 de l'écran 2 au niveau du seuil 7 de l'ouverture 1. Le déploiement de l'écran peut être guidé par des coulisses 6.

Le tube d'enroulement 4 peut être disposé à l'intérieur d'un coffre 9 ou être apparent. Le tube d'enroulement 4 est mobile en rotation par rapport à un support 10, tel qu'une joue, du coffre 9.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande 12 est représentée ici en version radio avec une antenne 12a. L'unité de commande centrale 13 pilote l'unité de commande locale 12, ainsi que d'autres unités de commande locales similaires et réparties dans le bâtiment. Elle est représentée ici munie d'une antenne radio 13a.

L'unité de commande centrale 13 peut être en communication avec un ou plusieurs capteurs, non représentés, pouvant être configurés pour déterminer, par exemple, une température, une luminosité intérieure ou extérieure.

Une télécommande 14, pouvant être un type d'unité de commande locale, et pourvue d'un clavier de commande, qui comprend des moyens de sélection et éventuellement d'affichage, permet, en outre, à un utilisateur d'intervenir sur l'actionneur électromécanique 11 et/ou l'unité de commande locale 12 et/ou centrale 13.

Le dispositif d'entraînement motorisé 5 est, de préférence, configuré pour exécuter les commandes de déroulement ou d'enroulement de l'écran 2 du dispositif d'occultation 3, pouvant être émises notamment par la télécommande 14, l'unité de commande locale 12, l'unité de commande centrale 13 ou un capteur.

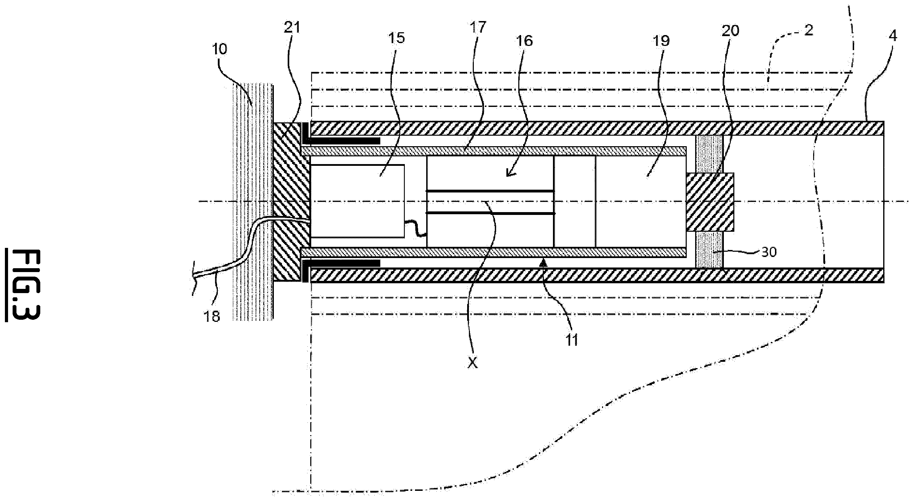

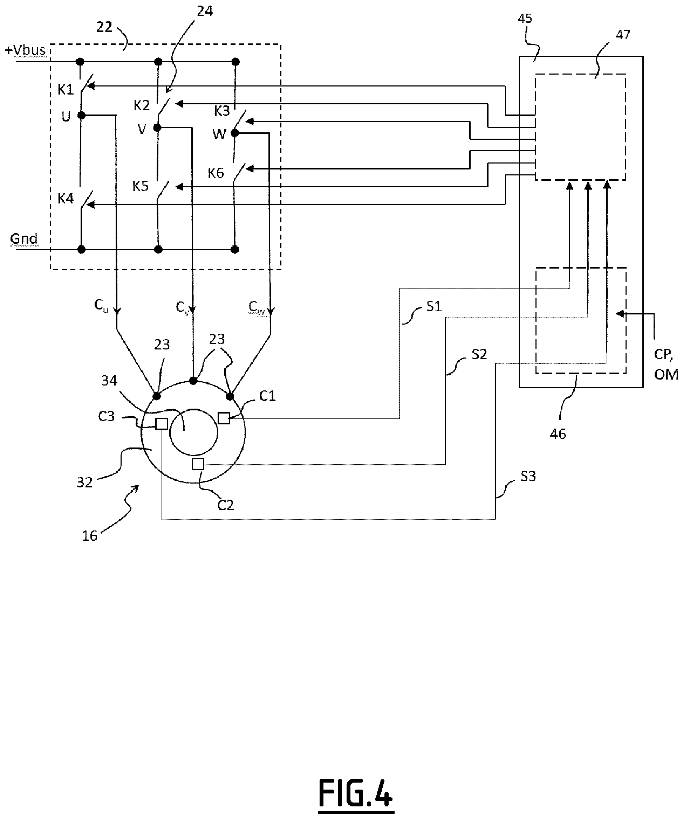

On va décrire à présent, plus en détail et en référence aux figures 3 et 4, l'actionneur électromécanique 11 appartenant à l'installation domotique des figures 1 et 2.

L'actionneur électromécanique 11 comprend un moteur électrique 16. Le moteur électrique 16 comprend un stator 32 et un rotor 34 positionnés de manière coaxiale autour de l'axe longitudinal ou axe de rotation X.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11 et, en particulier, à permettre l'alimentation en énergie électrique du moteur électrique 16. Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres 15a, en particulier d'ordres radioélectriques émis par un émetteur d'ordres, tel que la télécommande 14, destiné à commander l'actionneur électromécanique 11. Le module de réception d'ordres 15a peut également permettre la réception d'ordres transmis par des moyens filaires.

Ici, et tel qu'illustré à la figure 3, l'unité électronique de contrôle 15 est disposée à l'intérieur d'un carter 17 de l'actionneur électromécanique 11.

Les moyens de commande de l'actionneur électromécanique 11 comprennent des moyens matériels et/ou logiciels. A titre d'exemple nullement limitatif, les moyens matériels peuvent comprendre au moins un microcontrôleur 27.

L'actionneur électromécanique 11 est alimenté en énergie électrique par un réseau d'alimentation électrique du bâtiment, par exemple par le réseau alternatif du secteur ou par un bus à courant continu, ou encore au moyen d'une batterie non représentée, pouvant être rechargée, par exemple, par un panneau photovoltaïque. Ici, l'actionneur électromécanique 11 comprend un câble d'alimentation électrique 18 permettant son alimentation en énergie électrique depuis le réseau d'alimentation électrique du secteur.

Dans un autre mode de réalisation non représenté, l'actionneur électromécanique 11 est destiné à être placé dans un rail profilé en U et destiné à entraîner en rotation un arbre d'enroulement sur lequel s'enroulent des cordons associés à l'écran.

Le carter 17 de l'actionneur électromécanique 11 est, préférentiellement, de forme cylindrique. Dans un mode de réalisation, le carter 17 peut être réalisé dans un matériau métallique. La matière du carter de l'actionneur électromécanique n'est nullement limitative et peut être différente, il peut en particulier s'agir de matière plastique.

L'actionneur électromécanique 11 comprend également un réducteur 19, en particulier un réducteur épicycloïdal et un arbre de sortie 20. Avantageusement, le moteur électrique 16 et le réducteur 19 sont disposés à l'intérieur du carter 17 de l'actionneur électromécanique 11.

L'arbre de sortie 20 de l'actionneur électromécanique 11 est disposé à l'intérieur du tube d'enroulement 4 et, au moins en partie, à l'extérieur du carter 17 de l'actionneur électromécanique 11.

L'arbre de sortie 20 de l'actionneur électromécanique 11 est accouplé par un accessoire de liaison 30 au tube d'enroulement 4, en particulier un accessoire de liaison en forme de roue.

L'actionneur électromécanique 11 comprend également un support de couple 21, monté au niveau d'une extrémité du carter 17 opposée à l'arbre de sortie 20 et obturant l'extrémité du carter 17. Le carter 17 et le support de couple 21 sont fixes en rotation l'un par rapport à l'autre.

Le support de couple 21 de l'actionneur électromécanique 11 est fixé au support 10 du coffre 9 du dispositif d'occultation 3. Le support de couple 21 est également appelé « point fixe » de l'actionneur électromécanique 11.

L'actionneur électromécanique 11 comprend également une couronne-palier 31 montée sur le carter 17 et libre en rotation par rapport au carter 17. La couronne-palier 31 est fixée en rotation au tube d'enroulement 4, de sorte que la couronne-palier 31 assure une fonction de palier en rotation du tube d'enroulement 4 sur le carter 17, à proximité du support de couple 21.

L'actionneur peut également comprendre des dispositifs non représentés de suspension du moteur ou de l'ensemble constitué par le moteur électrique 16 et le dispositif de réduction à engrenages 19. Ces dispositifs de suspension sont par exemple connus de la demande EP1727959A1 et permettent de limiter la transmission des vibrations, générées au niveau de cet ensemble, à l'installation de fermeture ou de protection solaire et donc de limiter le bruit généré lors d'un fonctionnement de l'actionneur électromécanique 11. Ces dispositifs de suspension sont à l'origine d'une élasticité au sein de l'actionneur électromécanique, entre le support de couple 21 et l'arbre de sortie rotatif 20. Ils permettent donc d'introduire une déformation angulaire maitrisée, autour de l'axe X, entre le support de couple 21 et l'arbre de sortie rotatif 20 et ainsi de faciliter la mise en oeuvre du procédé de détection d'un obstacle décrit plus loin.

Ici, le moteur électrique 16 est de type sans balais à commutation électronique, appelé « BLDC » (acronyme du terme anglais BrushLess Direct Current) ou, de manière plus générale, de type moteur synchrone à aimants permanents, appelé« PMSM » (acronyme du terme anglais Permanent Magnetic Synchron Motor).

Le rotor 34 du moteur électrique 16 comprend un corps de rotor muni d'éléments magnétiques entourés par le stator 32. Ici, les éléments magnétiques sont des aimants permanents.

Le stator 32 du moteur électrique 16 comprend un noyau de stator comprenant des éléments polaires répartis sur la périphérie du stator 32. Les éléments polaires sont également appelés des dents.

Le stator 32 du moteur électrique 16 comprend des enroulements 23, en l'occurrence trois, reliés électriquement entre eux, tel qu'illustré schématiquement à la figure 4.

Préférentiellement, les enroulements 23 sont positionnés autour des éléments polaires du stator 32. Plus précisément, chaque élément polaire est entouré par un enroulement 23 qui lui est propre. Les enroulements 23 sont reliés entre eux de sorte que lorsqu'ils sont parcourus par un courant, ils produisent un champ électromagnétique tournant qui entraîne en rotation le rotor 34.

L'unité électronique de contrôle 15 de l'actionneur électromécanique 11 comprend un circuit non représenté de redressement de la tension alternative du réseau d'alimentation électrique et un module d'alimentation électrique 22. Le module d'alimentation électrique 22 est ainsi connecté électriquement à une source de tension continue +Vbus. La valeur de la tension continue +Vbus est définie par rapport à une tension de référence Gnd. Alternativement, le circuit de redressement de la tension alternative du réseau d'alimentation électrique peut être externe à l'actionneur électromécanique 11.

Le module d'alimentation électrique 22 alimente en énergie électrique, de manière séquentielle, les enroulements 23, de sorte à produire le champ électromagnétique tournant provoquant l'entraînement en rotation du rotor 34 du moteur électrique 16.

Le module d'alimentation électrique 22 comprend des commutateurs 24 permettant de réaliser l'alimentation électrique séquentielle des enroulements 23.

Ici, les commutateurs 24 du module d'alimentation électrique 22 sont des transistors de type « MOSFET » (acronyme du terme anglo-saxon Metal Oxide Semiconductor Field Effect Transistor), et au nombre de six. Ils sont repérés par les références K1, K2, K3, K4, K5 et K6 à la figure 4.

Le type des commutateurs 24 du module d'alimentation électrique et leur nombre ne sont nullement limitatifs. En particulier, les commutateurs 24 du module d'alimentation électrique 22 peuvent être des transistors de type « IGBT » (acronyme du terme anglo-saxon Insulated Gate Bipolar Transistor).

L'unité électronique de contrôle 15 de l'actionneur électromécanique 11 comprend également des capteurs C1, C2, C3, positionnés de manière fixe par rapport au stator 32, de préférence intégrés à celui-ci. De préférence, ces capteurs 18, 20 sont des capteurs à effet Hall à sortie binaire. De préférence, ces capteurs sont positionnés à 60° ou 120° l'un par rapport à l'autre autour de l'axe X, à l'intérieur du stator 32. Ces capteurs sont aptes à fournir une position angulaire du rotor 34 du moteur électrique 16 autour de l'axe X et donc une position angulaire équivalente de l'arbre de sortie 20 de l'actionneur électromécanique 11. Cette position angulaire du rotor est notamment destinée à la commande des commutateurs 24.

Le nombre des capteurs C1, C2, C3 n'est pas forcément égal à 3. Il peut également n'y avoir aucun capteur physique C1, C2 ou C3. Le nombre de capteurs peut également être égal à 1, 2 et 4 ou plus. Dans ce cas, la répartition du ou des capteurs autour de l'axe X est adaptée en fonction de leur nombre.

Une unité de commande 45 est notamment configurée pour piloter le moteur électrique 16 de manière à mettre en mouvement l'écran 2 pour le déplacer à une position souhaitée.

Par exemple, l'unité de commande 45 est configurée pour piloter le moteur électrique 16 suivant une technique de modulation de largeur d'impulsion (ou PWM pour « Puise Width Modulation » en anglais). L'unité de commande 45 est notamment configurée pour piloter le moteur électrique 16 en tenant compte de la position angulaire du rotor 32 par exemple mesurée par le ou les capteurs C1, C2, C3. En effet, les signaux S1, S2, S3 de sortie des capteurs C1, C2, C3 alimentent un algorithme de génération de signaux de commande, exécuté par le module 45, qui permet de déterminer les instants auxquels les signaux de commande sont envoyés au module de commutation 22. L'unité de commande comprend notamment un circuit de commande 46, comprenant un microprocesseur. Le circuit de commande 46 peut comporter une entrée de réception d'ordres, pour recevoir des consignes de position CP et/ou ordres de mouvement OM, tels que, par exemple, ouvrir ou fermer l'écran 2, provenant par exemple d'une unité de commande locale 12, d'une télécommande 14, d'une unité de commande centrale 13 ou d'un capteur de l'installation 100.

Le circuit de commande 46 peut comporter une interface 47 de sortie de signaux, laquelle émet les signaux de commande de pilotage des commutateurs 24 repérés par les références K1 à K6.

Le module d'alimentation électrique 22 et l'unité de commande 45 font partie, au moins partiellement, de l'unité électronique de contrôle 15 de l'actionneur électromécanique 11.

L'unité électronique de contrôle 15 de l'actionneur électromécanique 11 comprend un dispositif de détection d'obstacle et de fins de course lors de l'enroulement de l'écran 2 et lors du déroulement de cet écran. Ce dispositif sera décrit plus en détails ci-après, en référence aux figures 4 à 7.

L'actionneur électromécanique 11 comprend un premier dispositif de détection de position 36, adapté à définir une position angulaire du rotor 34 autour de l'axe X. Selon un mode de réalisation représenté à la figure 4, le premier dispositif de détection de position comprend les capteurs C1, C2, C3, positionnés de manière fixe par rapport au stator 32.

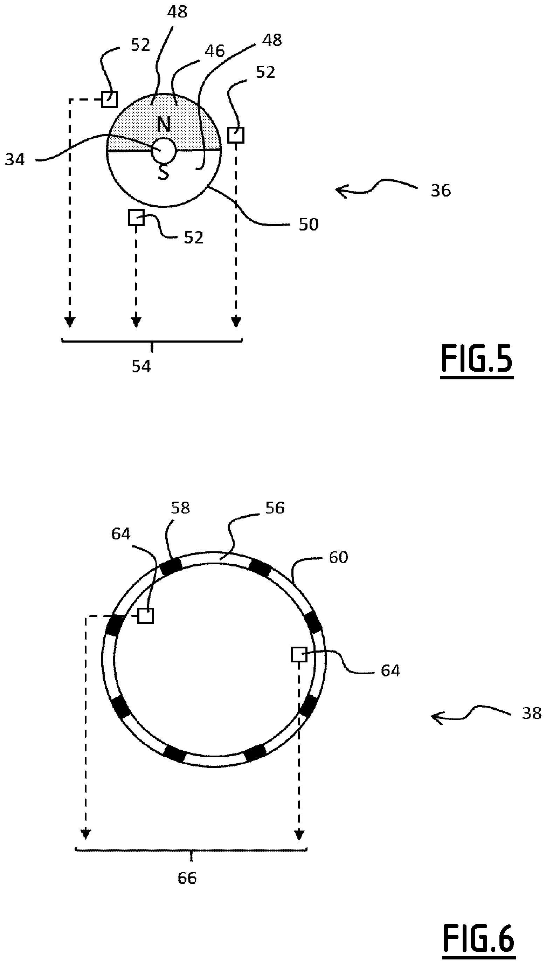

Selon un deuxième mode de réalisation alternatif représenté à la figure 5, le premier dispositif de détection 36 comprend, d'une part, une roue 46 dite roue codeuse, comprenant des secteurs aimantés 48 dont la polarité est alternée sur la circonférence 50 de la roue codeuse 46. La roue codeuse 46 peut comprendre deux secteurs aimantés ou plus. La roue codeuse 46 coopère avec le rotor 34 en étant entraînée en rotation par le rotor 34. Dans l'exemple de la figure 5, la roue codeuse 46 est montée sur une extrémité du rotor 34, dépassant axialement du stator 32 et située à l'opposé de l'arbre de sortie 20 de l'actionneur électromécanique 11.

Le premier dispositif de détection de position 36 comprend, d'autre part, un premier dispositif de capteurs 52, comprenant un ou plusieurs capteurs magnétiques, par exemple à effet Hall ou magnéto-résistifs, positionné(s) en vis-à-vis de la roue codeuse 46. Le premier dispositif de capteurs 52 fait également partie de l'unité de contrôle ou est reliée à celle-ci et peut comprendre les capteurs C1, C2, C3. Les signaux 54 issus du premier dispositif de capteurs 52, générés par la rotation de la roue codeuse 46 face au premier dispositif de capteurs 52, sont transmis au microcontrôleur 27 de l'unité électronique de contrôle 15 et le déplacement angulaire du rotor 34 et/ou la position angulaire du rotor 34 est défini à partir de ces signaux 54.

Selon un mode de réalisation alternatif et non représenté, le premier dispositif de détection de position 36 comprend des moyens matériels et logiciels pour déterminer la position du rotor 34 sans capteur physique spécifique mesurant la rotation du rotor. De tels moyens matériels et logiciels sont, par exemple, décrits dans la demande WO2014207387A1.

Tout autre type de moteur électrique est également envisageable, avec une alimentation et un contrôle adaptés, ainsi qu'un premier dispositif de détection de position 36 correspondant. Ainsi, par exemple, si le moteur est un moteur à courant continu intégrant un dispositif de balais et de collecteur, le premier dispositif de détection de position comprend les moyens de comptage des passages de balais au niveau du collecteur lors de la rotation du moteur. Alternativement, si le moteur électrique est un moteur asynchrone alimenté par du courant alternatif, le premier dispositif de détection de position comprend des capteurs magnétiques, par exemple positionnés en sortie du moteur électrique 16.

L'actionneur électromécanique 11 comprend également un deuxième dispositif de détection de position 38, adapté à définir une position angulaire de l'arbre d'enroulement 4 autour de l'axe X.

Le deuxième dispositif de détection de position 38 comprend de manière similaire au premier dispositif de détection de position 36 un élément rotatif 56 magnétisé. Dans un premier mode de réalisation illustré à la figure 6, l'élément rotatif magnétisé 56 comprend et supporte des aimants discrets 58, montés sur un support rotatif 60 de façon alternée, c'est-à-dire de telle manière que l'élément rotatif 56 présente un pourtour radial ou une face axiale avec des secteurs aimantés alternatifs 40.

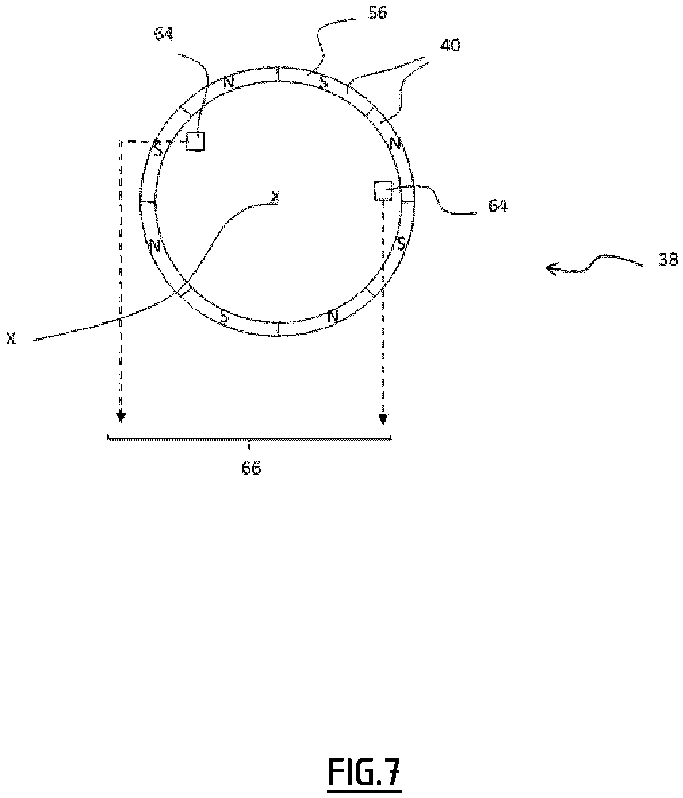

Dans un deuxième mode de réalisation représenté schématiquement à la figure 7, l'élément rotatif 56 magnétisé comprend un anneau polarisé. L'élément rotatif 56 est monté libre en rotation par rapport au support de couple 21 ou au carter 17 de l'actionneur électromécanique 11. Il est adapté à être entraîné en rotation autour de l'axe X par l'intermédiaire de l'arbre de sortie 20 de l'actionneur électromécanique 11, notamment adapté à être entraîné en rotation par l'arbre d'enroulement 4, couplé en rotation avec l'arbre de sortie 20 de l'actionneur électromécanique 11.

Le deuxième dispositif de détection 38 comprend également un deuxième dispositif de capteurs 64 comprenant un ou plusieurs capteurs magnétiques, par exemple à effet Hall à une, deux ou trois dimensions ou magnéto-résistifs, positionné(s) en vis-à-vis de l'élément rotatif 56. Le deuxième dispositif de capteurs 64 fait également partie de l'unité électronique de contrôle 15 ou est reliée à celle-ci. Les signaux 66 issus du deuxième dispositif de détection 38, générés par la rotation de l'élément rotatif magnétisé 56 face au deuxième dispositif de capteurs 64, sont transmis au microcontrôleur 27 de l'unité électronique de contrôle 15 et la position ou le déplacement angulaire de l'élément rotatif 56 est défini à partir de ces signaux 66.

Le deuxième dispositif de détection de position 38 est adapté à déterminer la rotation autour de l'axe X de la couronne-palier 31 par rapport au carter 17 ou au support de couple 21 de l'actionneur électromécanique 11. La couronne-palier 31 correspond ainsi à l'élément rotatif 56. La couronne-palier 31 comprend au moins deux secteurs magnétiques 40 répartis régulièrement sur un pourtour ou une face en vis-à-vis d'un dispositif de capteur magnétique 64 disposé dans le carter 17 de l'actionneur électromagnétique 11.

Le premier dispositif de détection de position 36 est notamment utilisé pour déterminer la position du rotor 34 en vue de la commande du moteur électrique 16, notamment dans le cas d'un moteur de type PMSM, à commutation électronique. Sa précision est requise pour permettre notamment ce pilotage.

L'arrivée de l'écran 2 dans des positions particulières apprises au préalable, par exemple des positions extrêmes, dites de fin de course peut être gérée soit par le premier dispositif de détection de position 36 soit par le deuxième dispositif de détection de position 38. Au moins l'un des deux dispositifs doit donc être suffisamment précis pour gérer l'arrivée dans les positions extrêmes, selon les prérequis du marché, notamment pour gérer l'alignement visuel de deux barres lestées 8 de deux écrans 2 placés côte à côte.

Une réalisation préférée de l'actionneur électromécanique 11 comprend un moteur électrique « synchrone à aimants permanents », à commutation électronique ou un moteur à courant continu à balais et collecteur, dans lequel seul le deuxième dispositif de détection 38 comprend des capteurs magnétiques ou optiques aptes à déterminer le déplacement angulaire de l'arbre d'enroulement. Dans ce mode de réalisation préféré, l'arrivée de l'écran 2 dans des positions de fin de course est gérée par le deuxième dispositif de détection de position 38.

Le deuxième dispositif de détection de position 38 est utilisé en combinaison avec le premier dispositif de détection de position 36 pour la gestion d'obstacle. Les deux dispositifs de détection de position 36, 38 peuvent avoir des précisions différentes. La contrainte de précision est plus importante pour la gestion des positions extrêmes, gérée par un seul des deux compteurs, que la détection d'obstacle, basée sur les deux dispositifs de détection de position 36 et 38.

L'unité électronique de contrôle 15 comprend les moyens matériels, tel que le microcontrôleur 27, et logiciels de traitement des données issues des deux dispositifs de détection de position 36, 38 de sorte à déterminer à partir des données fournies par le premier dispositif de détection de position 36 et par le deuxième dispositif de détection de position 38 une valeur de déplacement angulaire du rotor 34 par rapport au stator 32 et une valeur de déplacement angulaire de l'arbre d'enroulement 4 par rapport au carter 17 ou au support de couple 21 de l'actionneur électromécanique 11. L'unité électronique de contrôle 15 comprend notamment une mémoire, non représentée, pour stocker une valeur courante et une valeur d'origine de déplacement angulaire et pour stocker un algorithme de mise en oeuvre du procédé de détection d'obstacle par ce microcontrôleur 27.

Le procédé de détection d'un obstacle s'opposant au mouvement de l'écran 2 dans l'installation domotique 100 de fermeture ou de protection solaire est mis en oeuvre de la manière suivante.

Le procédé comprend une étape E101 de détermination d'une valeur de déplacement angulaire Dθ du rotor 34 par rapport au stator 32 de l'actionneur électromécanique 11. L'étape de détermination E101 comprend une sous-étape de récupération des signaux 54 issus respectivement du premier dispositif de détection de position 36.

Le procédé comprend une étape E103 de détermination d'une valeur de déplacement angulaire DΦ de l'arbre d'enroulement 4 par rapport au carter 17 ou au support de couple 21 de l'actionneur électromécanique 11. L'étape de détermination E103 comprend une sous-étape de récupération des signaux 66 issus du deuxième dispositif de détection de position 38.

Les signaux 54, 66 issus de chaque dispositif de détection de position 36, 38 peuvent être traités et filtrés.

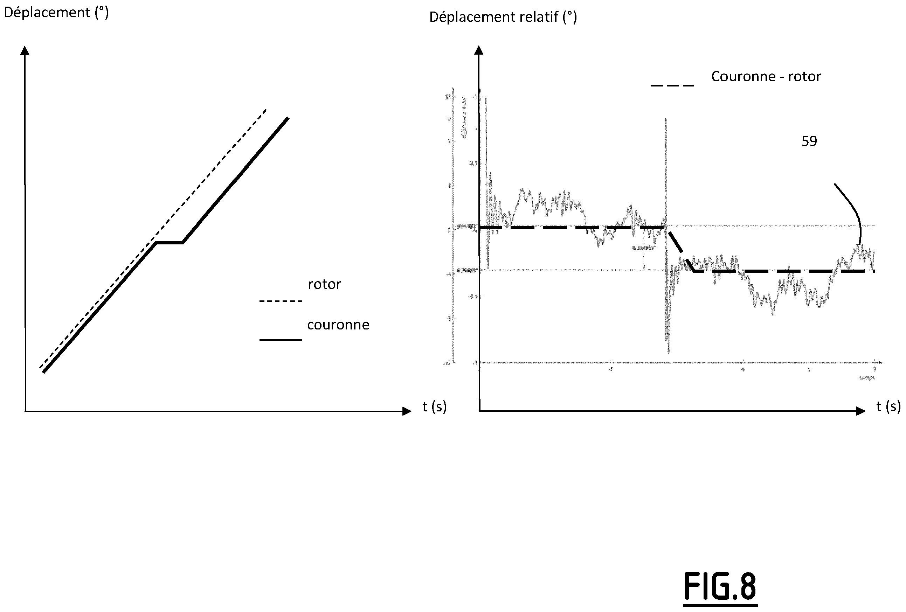

Alternativement, un signal de comparaison 59, issu de la comparaison des deux signaux 54 et 56 est traité et filtré. Ce signal de comparaison est représenté à la figure 8.

Les signaux 54 et 66 ne peuvent cependant être comparés que s'ils sont rapportés à un même repère de temps. En effet, du fait des vitesses de rotation différentes du rotor 34 et de l'arbre de sortie 20, ou des vitesses de rotation différentes du rotor 34 et de l'arbre d'enroulement 4, par interposition du réducteur 19 entre eux, les repères de temps ne sont pas les mêmes. Autrement dit, les déplacements angulaires Dθ et DΦ respectivement issus des signaux 54 et 66 ne peuvent être comparés que si l'un d'entre eux est rapporté à l'autre par conversion en utilisant comme facteur de multiplication ou de division le rapport de réduction du réducteur 19, celui-ci étant défini par la suite, par convention, comme supérieur à 1. En particulier, le signal 54 est rendu comparable au signal 66 par division par le rapport de réduction du réducteur 19, c'est-à-dire que le déplacement angulaire Dθ est rendu comparable au déplacement angulaire DΦ en le divisant par le rapport de réduction R19 du réducteur 19. Inversement, le signal 66 est rendu comparable au signal 54 par multiplication par le rapport de réduction du réducteur 19, c'est-à-dire que le déplacement angulaire DΦ est rendu comparable au déplacement angulaire Dθ en le multipliant par le rapport de réduction R19.

En d'autres termes, le procédé comprend une étape de conversion E105 de la valeur de déplacement angulaire du rotor 34 en une donnée de déplacement angulaire équivalente de l'arbre d'enroulement 4. La donnée de déplacement angulaire équivalente est obtenue en divisant ou en multipliant la valeur de déplacement angulaire du rotor 34 par le rapport de réduction théorique R19 du réducteur 19 de l'actionneur électromécanique 11.

Alternativement, l'étape de conversion peut agir sur la donnée de déplacement angulaire de l'arbre d'enroulement 4 ou de l'arbre de sortie 20, de sorte à la convertir en une donnée de déplacement angulaire équivalente du rotor 34. La comparaison entre les valeurs de déplacement angulaire et de déplacement angulaire équivalente permet de vérifier la présence ou l'absence d'un obstacle sur le parcours de l'écran 2.

Le procédé comprend une étape E107 de détermination d'une déformation angulaire DA de la chaîne cinématique entre le moteur électrique 16 et l'arbre d'enroulement 4 par comparaison entre les valeurs de déplacement angulaire obtenues aux étapes précédentes E101 et E105 ou E103 et E105, autrement dit par analyse du signal de comparaison 59 issu de la comparaison des deux signaux 54 et 56.

Le procédé comprend ensuite une étape de détermination E109 de la présence d'un obstacle au mouvement de l'écran 2 à partir d'une comparaison d'une valeur de déformation angulaire DA déterminée à l'étape E107 de la chaîne cinématique par rapport à une valeur de seuil VS prédéfinie de déformation angulaire. On considère qu'un obstacle est présent si la déformation angulaire déterminée à l'étape E107 est supérieure à la valeur de seuil VS prédéfinie de déformation angulaire.

Si la valeur de déformation angulaire DA est supérieure à la valeur de seuil VS, une alarme est activée dans une étape E111. Dans le cas contraire, le procédé reprend à l'étape E101.

Au vu de la structure de l'actionneur électromécanique 11 dans l'installation 100, la déformation angulaire n'est constatable que si la chaîne cinématique est susceptible de permettre une telle déformation angulaire. Une première option est d'ajouter dans la chaîne cinématique entre la sortie du rotor 34 et le point de rattachement du tube d'enroulement 4 à la couronne-palier 31 un élément de déformation 70. Cette première option sera discutée plus en détail ci-dessous.

Une deuxième option consiste à utiliser les propriétés élastiques des matériaux des différents composants de la chaîne cinématique, notamment des propriétés d'élasticité notamment en torsion, en particulier lorsqu'un dispositif de suspension est intégré dans l'actionneur électromécanique, comme décrit ci-dessus. La réponse de l'actionneur électromécanique 11 en cas d'obstacle sera dans cette deuxième option moins rapide qu'un élément de déformation spécifiquement adapté.

En particulier, un élément de déformation 70 peut être ajouté dans la chaîne cinématique entre la sortie du rotor 34 et le point de rattachement du tube d'enroulement 4 à la couronne-palier 31.

On sait que pour détecter un obstacle sur un coté de la barre lestée 8 de l'écran 2, il faut pouvoir mesurer une variation de couple de 0.02 Nm à 0.15 Nm selon le couple nécessaire à la motorisation de l'écran. Dans certains cas, il faut ajouter une élasticité supplémentaire dans la chaîne cinématique. Ceci peut être réalisé par un élément de déformation 70 tel qu'un dispositif à ressort, disposé soit au niveau de l'accessoire de liaison 30 de l'arbre de sortie 20 de l'actionneur électromécanique 11 au tube d'enroulement 4, soit au niveau de l'arbre de sortie 20 lui-même. Cet élément de déformation 70 ajoute de l'élasticité à, ou diminue la raideur de, la chaîne cinématique entre les pièces 34 et 4, ce qui permet d'observer plus facilement et rapidement des différences de position angulaire mesurées par le premier dispositif de détection de position 36 et par le deuxième dispositif de détection de position 38.

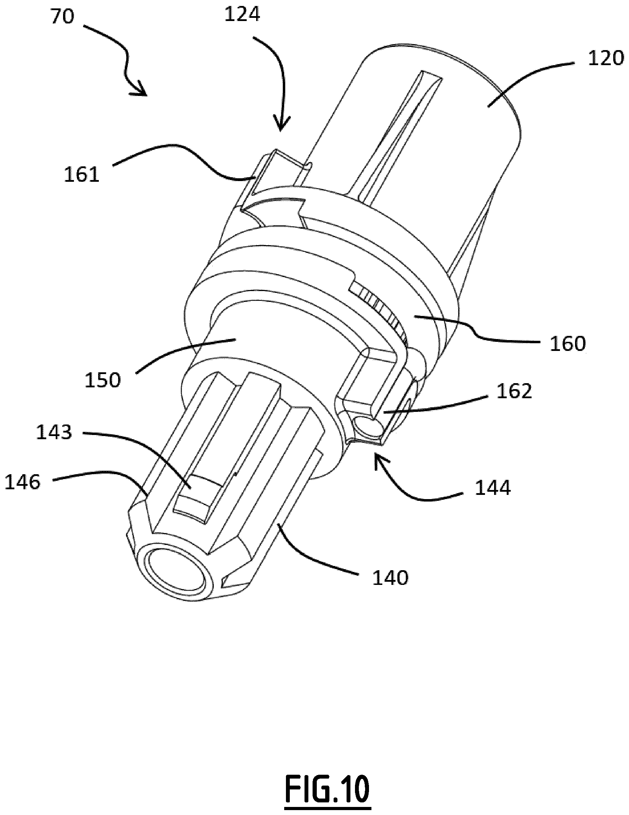

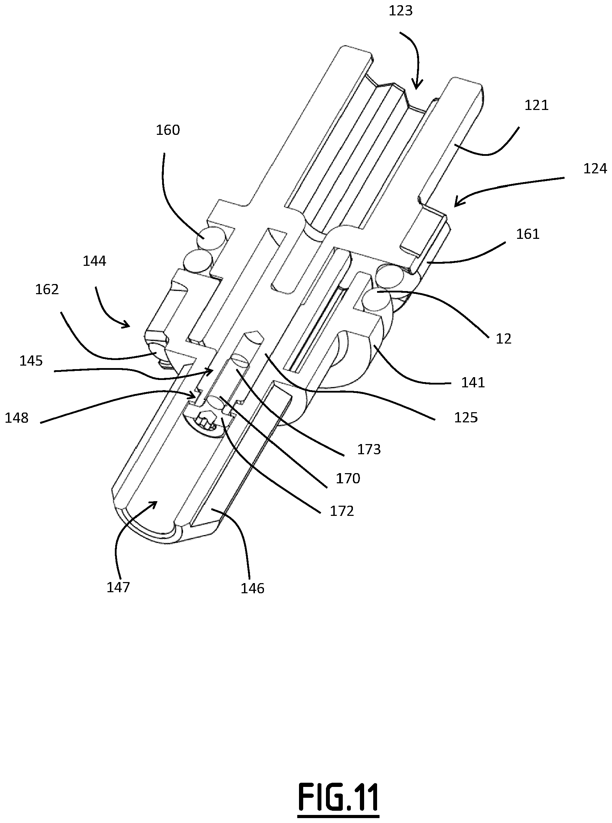

Selon le mode de réalisation de l'élément de déformation 70 représenté aux figures 10 à 12, l'arbre de sortie 20 comprend deux parties distinctes : une partie amont 120 de l'arbre de sortie 20 est fixée en rotation avec la sortie du réducteur 19 et une partie aval 140 adaptée à la fixation à l'arbre d'enroulement 4, par exemple par le biais d'un accessoire de liaison 30. La partie amont 120 comprend un corps 121 à partir duquel s'étend une tige 125. Le corps 121 comprend également un évidement interne 123 cannelé, adapté à coopérer avec un arbre de sortie non représenté du réducteur 19, à l'opposé de la tige 125. A la périphérie du corps 121 se trouve également une gorge longitudinale 124.

Un bloc semi-cylindrique 126 s'étend également à partir du corps 121. Le bloc 126 comprend une surface extérieure 130 et deux surfaces de butées 131, 132, de part et d'autre du bloc 126, prolongeant la surface extérieure 130 en direction de la tige 125. Le bloc semi-cylindrique 126 s'étend partiellement autour de la tige 125, en étant solidaire avec la tige 125.

La partie aval 140 comprend une première extrémité 141 laquelle comprend sur sa périphérie extérieure une gorge longitudinale 144. Une deuxième extrémité 142 de la partie aval 140 est munie de cannelures 146 et de clips 143 sur son pourtour extérieur, adaptés à la fixation de l'accessoire de liaison 30 sur cette partie aval 140 par clippage. La partie aval 140 est montée en rotation sur la partie amont 120, par exemple par coopération de la tige 125 de la partie amont 120 et d'un premier évidement cylindrique 145 correspondant, interne à la partie aval 140 et ménagé en partie dans la première extrémité 142.

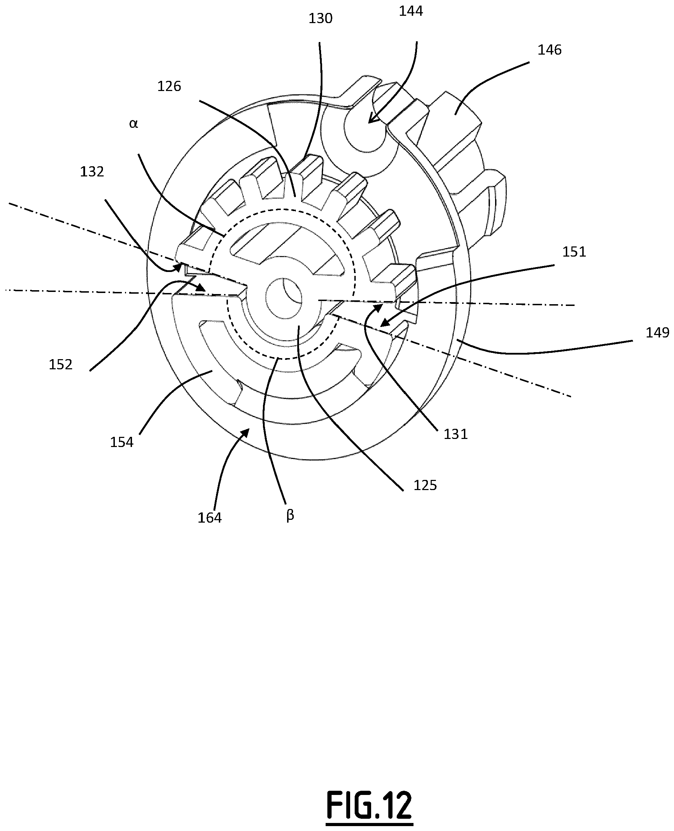

Les deux parties amont 120 et aval 140 sont maintenues en position l'une par rapport à l'autre par un dispositif élastique 160, tel qu'un ressort hélicoïdal, dont une première patte 161 repliée est bloquée dans la gorge 124 de la partie amont 120 et dont une seconde patte 162 repliée est bloquée dans la gorge 144 prévue sur la partie aval 140. Les spires du ressort 160 sont maintenues, sur le diamètre intérieur du ressort notamment, par la surface extérieure 130 de la partie amont et par un demi-cylindre 154 correspondant sur la partie aval 140. Les premières et dernières spires du ressort sont maintenues axialement sur des rampes 164, dont une seule est visible à la figure 12. Les deux parties amont 120 et aval 140 sont également maintenues axialement l'une par rapport à l'autre au moyen d'une vis 170, munie d'une tête 172 et d'une tige filetée 173, la vis 170 n'empêchant pas la rotation de la partie aval 140 par rapport à la partie amont 120. La tête de vis 172 est à cet effet libre en rotation par rapport à la partie aval 140. La vis est introduite par un deuxième évidement cylindrique 147 débouchant sur la première extrémité 141 de la partie aval 140 et rejoignant le premier évidement cylindrique 145 par le biais d'un passage circulaire 148 dont le diamètre est légèrement supérieur au diamètre de la tige filetée 173 de la vis 170, mais inférieur au diamètre de la tête de vis 172.

Le premier évidement cylindrique 145 est partiellement prolongé axialement par un bloc semi-cylindrique 149. Le bloc 149 comprend également une surface extérieure 150 et deux surfaces de butées 151, 152, de part et d'autre du bloc et rejoignant la surface extérieure 150 et une paroi intérieure 153 en prolongement de l'évidement cylindrique 145.

Lorsque les parties amont 120, aval 140 et le ressort 160 sont assemblés, le bloc semi-cylindrique 126 de la partie amont 120 se retrouve en vis-à-vis du bloc cylindrique 149 de la partie aval 140. Les surfaces de butées 131, 132 et 151, 152 ne sont pas en contact au repos. Un espace subsiste entre les surfaces de butées en regard. Autrement dit, l'angle α formé par les surfaces 131 et 132 entre elles au sein du bloc 126 et/ou l'angle β formé par les surfaces 151 et 152 entre elles au sein du bloc 149 est strictement inférieur à 180°. La somme des angles α et β est strictement inférieure à 360°.

Lors de la rotation de la partie aval 140 par rapport à la partie amont, contre l'action du ressort et ce, quel que soit le sens de rotation entre la partie aval 120 et la partie amont 140, le déplacement angulaire est possible, mais limité par les surfaces de butées 131 et 151 ou 132 et 152 qui entrent en contact l'une avec l'autre.

En pratique, par l'effet du poids de la charge agissant sur l'élément de déformation 70, le dispositif élastique 160 est contraint dans un sens en torsion. Le dispositif élastique 160 est dimensionné de manière à ce que les surfaces de butée 131 ou 132 ne viennent en contact des surfaces de butées 151 ou 152 qu'au-delà d'un couple de torsion supérieur à un couple nominal de fonctionnement de l'actionneur électromécanique 11. Le soulèvement du poids de la barre lestée 8 du fait de la présence d'un obstacle sur le trajet de celle-ci soulage la contrainte sur le ressort 160 et permet une déformation angulaire de l'élément de déformation 70. L'élément de déformation 70 étant placé sur la chaîne cinématique entre le premier dispositif de détection de position 36 et le deuxième dispositif de détection de position 38, la variation angulaire constatée entre les deux signaux issus de ces dispositifs de détection de position permet de constater, de manière fiable, la présence d'un obstacle.

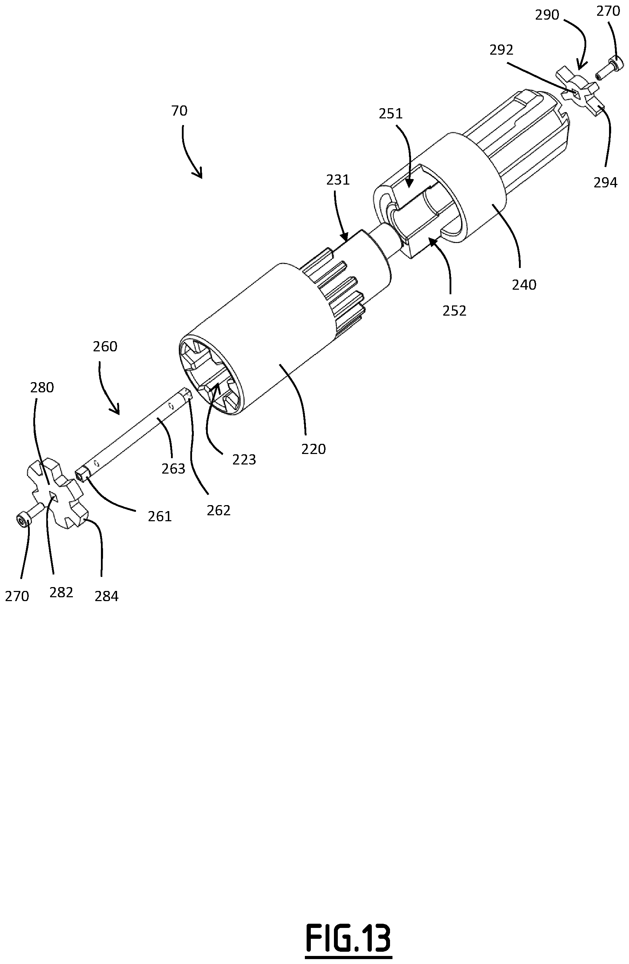

Selon une alternative représentée sur la figure 13, l'élément de déformation 70 comprend une barre de torsion montée entre la sortie du réducteur 19 et l'arbre de sortie 20. Cet élément de déformation 70 sous forme de barre de torsion transmet le couple moteur vers l'arbre d'enroulement 4, de la même manière que l'élément de déformation décrit ci-dessus qui comprend un ressort. Ainsi que représenté sur la figure 13, l'arbre de sortie 20 comprend deux parties distinctes. Une partie amont 220 de l'arbre de sortie 20 est fixée en rotation avec la sortie du réducteur 19, par coopération de formes entre un évidement interne 223 cannelé et l'arbre de sortie du réducteur 19. Une partie aval 240 est adaptée à la fixation à l'arbre d'enroulement 4, par exemple par le biais d'un accessoire de liaison, tel que celui représenté à la figure 3 avec la référence 30. Les deux parties amont 220 et aval 240 fonctionnent de manière similaire au mode de réalisation précédent, dans le sens où elles sont maintenues en position l'une par rapport à l'autre par un dispositif élastique 260, qui est ici réalisé sous la forme d'une barre de torsion. Les deux parties amont 220 et aval 240 comprennent des surfaces de butées 231, 232 (non visible sur la figure 13) et 251, 252 qui sont en vis-à-vis lorsque l'arbre de sortie 20 est assemblé, avec un espace subsistant entre les surfaces de butées en regard. Autrement dit, l'angle formé par les surfaces 231 et 232 entre elles et/ou l'angle formé par les surfaces 251 et 252 entre elles est strictement inférieur à 180°. La barre de torsion 260 est maintenue fixe en rotation par ses extrémités avec la partie amont 220 et avec la partie aval 240 notamment par coopération de formes. En particulier, la barre de torsion 260 comprend une partie centrale 263, globalement cylindrique, et deux extrémités amont 261 et aval 262 de forme polygonale, carrée ou hexagonale par exemple. Une première plaque de fixation 280 comprend un évidement central 282 complémentaire de l'extrémité amont 261 de la barre de torsion 260 et un pourtour externe 284 complémentaire de l'évidement interne 223 cannelé de la partie amont 220. Une deuxième plaque de fixation 290 comprend un évidement central 292 complémentaire de l'extrémité aval 262 de la barre de torsion 260 et un pourtour externe 294 complémentaire d'un évidement interne 247 non circulaire de la partie aval 240. Les extrémités polygonales 261 et 262 de la barre de torsion 260 viennent se loger sans possibilité de rotation dans les plaques de fixation 280 et 290, elles-mêmes étant fixes en rotation dans les parties amont 220 et aval 240. La barre de torsion 260 est également fixée axialement par des vis 270, visées aux extrémités 261 et 262 de la barre de torsion et venant serrer les plaques de fixation 280 et 290 contre la partie centrale 263 cylindrique de la barre de torsion 260.

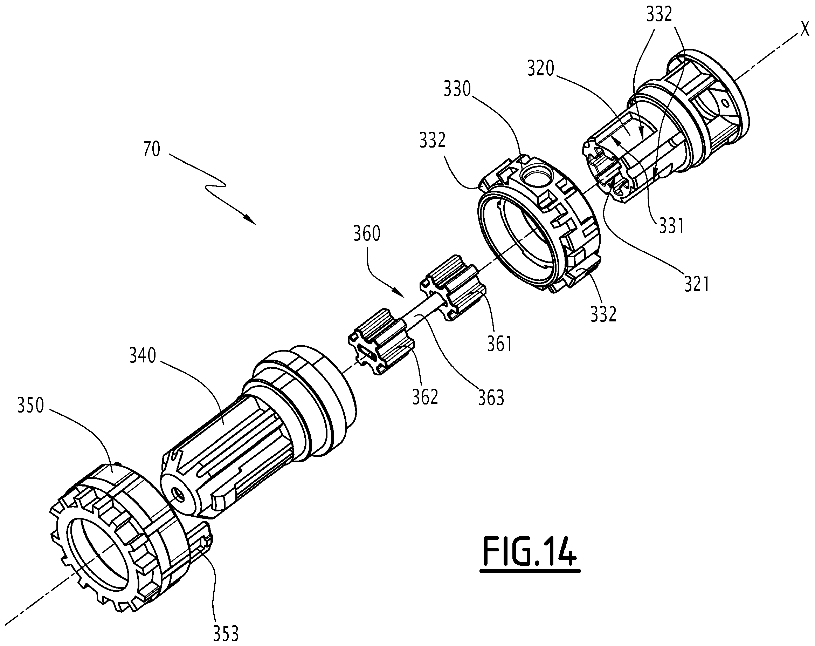

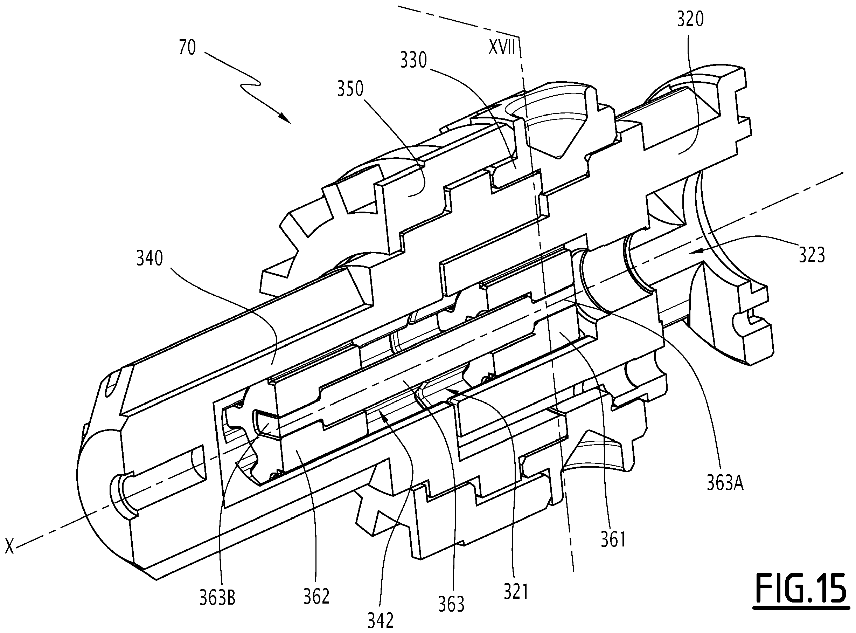

Selon une autre alternative représentée sur les figures 14 à 17, l'élément de déformation 70 comprend un dispositif élastique réalisé également ici sous la forme d'une barre de torsion 360 montée entre la sortie du réducteur 19 et l'arbre de sortie 20. Cet élément de déformation 70 transmet le couple moteur vers l'arbre d'enroulement 4, de la même manière que l'élément de déformation de la figure 13. Une partie amont 320 de l'arbre de sortie 20 est fixée en rotation avec la sortie du réducteur 19, par coopération de formes entre un évidement interne 323 cannelé de cette partie amont et l'arbre de sortie du réducteur 19. Une partie aval 340 de l'arbre de sortie 20 est adaptée à la fixation à l'arbre d'enroulement 4, par exemple par le biais d'un accessoire de liaison, tel que celui représenté à la figure 3 avec la référence 30. Deux bagues 330 et 350 sont respectivement montées autour des parties amont 320 et aval 340. Ces bagues sont solidarisées entre elles par clippage élastique et/ou coopération de formes entre des languettes, dont une seule est visible à la figure 14 avec la référence 353, qui s'étendent à partir de la bague 350 et qui viennent recouvrir des reliefs externes 332 de la bague 330 lorsque les bagues sont assemblées l'une à l'autre. Les bagues 330 et 350 permettent de maintenir et de centrer l'élément de déformation 70 dans le carter ou le tube d'enroulement définis comme dans le premier mode de réalisation.

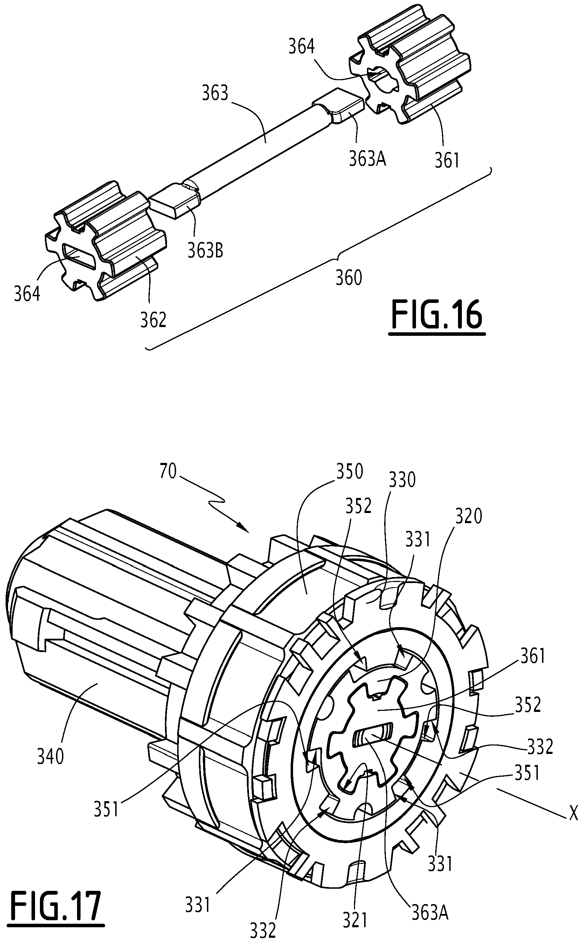

Les deux parties amont 320 et aval 340 comprennent respectivement des surfaces de butées 331, 332 et 351, 352 qui sont en vis-à-vis lorsque l'arbre de sortie 20 est assemblé, comme visible à la figure 17, avec des espaces subsistant entre les surfaces de butées en regard. Les largeurs de ces espaces, mesurées entre les surfaces de butée 331 et 351 ou 332 et 352 selon une direction ortho-radiale à l'axe X défini comme dans le premier mode de réalisation, sont variables en fonction de la position angulaire relative des parties amont 320 et aval 340 autour de l'axe X.

La barre de torsion 360 est globalement en forme d'haltère et comprend une tige centrale 363, de préférence métallique, et deux pignons 361 et 362, réalisés en matériau synthétique ou en métal, qui forment respectivement les extrémités amont et aval de la barre de torsion. Les pignons 361 et 362 sont respectivement configurés pour être en prise avec une denture interne 321 de la partie amont 320 et avec une denture interne 342 de la partie aval 340. Ainsi, la barre 360 travaille en torsion en cas de déplacement relatif des parties amont et aval 320 et 340, en rotation autour de l'axe X.

Comme cela ressort de la figure 16, la tige centrale est pourvue de deux extrémités aplaties 363A et 363B configurées pour être reçues dans des logements de forme correspondante 364 ménagés au centre des pignons 361 et 362, ce qui permet une transmission de couple entre la tige centrale et les pignons. L'assemblage entre les pignons 361 et 362, d'une part, et la tige 363, d'autre part, est réversible. Les extrémités 363A et 363B ont la même forme. Les logements 364 des deux pignons 361 et 362 ont également la même forme.

En sélectionnant le matériau ou en modifiant le diamètre de la tige 363, il est possible d'ajuster la rigidité en torsion de la barre 360, donc celle de l'élément de déformation 70 dans son ensemble. Ceci est avantageux pour constituer une gamme d'éléments de déformation 70 de rigidités en torsion différentes.

Le procédé peut comprendre, de manière facultative, une étape préalable E100 d'apprentissage.

L'étape d'apprentissage E100 peut comprendre une étape d'apprentissage d'un seuil de variation angulaire. Alternativement, le seuil de variation angulaire entre les deux dispositifs de détection peut être choisi fixe. L'étape d'apprentissage peut comprendre une étape d'apprentissage d'un temps de détection. L'étape d'apprentissage E100 permet d'adapter la détection d'obstacle à l'installation 100, voire à la position de l'écran 2 sur sa course.

Cette étape E100 d'apprentissage peut avoir lieu lors de la mise en place du dispositif d'occultation motorisé au sein de l'installation 100. Dans ce cas, le ou les seuils, et/ou le temps de détection de l'obstacle pourront être déterminés par apprentissage lors de la réalisation d'un cycle d'apprentissage, c'est-à-dire un cycle complet d'ouverture-fermeture sans obstacle. Lors de ce cycle, un ou plusieurs écarts maximums, c'est-à-dire des maximums locaux de la valeur de déformation angulaire DA de la chaîne cinématique au cours du cycle, sont déterminés et enregistrés, la déformation angulaire étant définie au cours d'une étape similaire à l'étape E107.

Parallèlement, lors de ce cycle d'apprentissage, la durée d'apparition de ces écarts de déformation angulaire est également mesurée. Ces valeurs d'écart et de durée permettent de définir une ou plusieurs valeurs de seuil VS de déformation angulaire.

Cette ou ces valeurs de seuil sont intégrées aux algorithmes de filtrage et d'analyse des valeurs de dispositifs de détection de position.

En d'autres termes, on peut éventuellement constater lors du cycle d'apprentissage de l'étape E100 une variation angulaire progressive sur au moins une partie du cycle, auquel cas, le seuil peut également être défini comme un seuil variable progressif, avec un temps de réaction relativement lent. Alternativement, on peut éventuellement constater lors du cycle d'apprentissage, des variations angulaires brusques, par exemple liées à des passages de points durs de la barre lestée 8 dans les coulisses 6, avec un temps de réaction relativement rapide. Les valeurs de seuil peuvent être définies à partir de valeurs mesurées lors de cycles d'apprentissage et d'une valeur de marge de sécurité.

Par l'application d'un ajustement aux valeurs de seuil utilisées pour la reconnaissance d'une situation d'obstacle, on évite les déclenchements intempestifs et on s'adapte à la fluidité de déroulement de l'écran selon les situations d'installation. La sensibilité et le temps de réaction du dispositif peuvent ainsi être adaptés à ces situations propres à chaque installation.

L'étape E100 d'apprentissage peut également être réitérée au cours de la vie du produit notamment de manière automatique. Plusieurs cycles d'apprentissage peuvent être nécessaires avant de modifier les valeurs préalablement enregistrées. En particulier, les valeurs de seuil, la sensibilité de détection ou le temps de détection peuvent être ajustés au cours de ces cycles d'apprentissage, pour déterminer la valeur la plus adaptée à l'installation.

Le signal de comparaison 59 obtenu à partir des deux dispositifs de détection de position 36 et 38 peut être traité et filtré selon des méthodes classiques, notamment par filtrage statique ou dynamique. En particulier, plusieurs paramètres de filtrage peuvent être définis et ajustés : le nombre F de valeurs du filtre, l'écart d'indice p par rapport à la valeur précédente, le seuil de détection S en valeur du compteur. Le signal de comparaison 59 peut être filtré selon une moyenne simple par exemple ou selon d'autres filtrages plus complexes et sur F valeurs. Un algorithme avec filtrage important, ou filtrage dynamique, permet d'éliminer les hautes et basses fréquences et permet de déterminer une mesure d'écart relatif.

On détermine en effet un écart entre une valeur de signal à un instant n, Dn, et celle déjà calculée à p valeurs auparavant Dp soit : Dn - Dp = Diff. On utilise alors le seuil de déclenchement de la détection S pour déclencher la fonction dès que | Diff | > S. On peut également éliminer les valeurs Diff positives ou négatives qui ne correspondent pas au sens de déplacement dans lequel on se trouve (montée ou descente) pour améliorer ce principe. Pour un filtre simple par moyennage F= p. On définit alors une gamme de valeurs pour F pour filtrer plus ou moins sévèrement, ceci impactant le temps de détection et correspondant à plus ou moins de sensibilité relativement aux risques de déclenchements intempestifs.

Si on souhaite limiter les ressources en calcul durant le fonctionnement de l'installation, le filtrage peut être plus limité. On parle alors de filtrage statique. Par exemple, la mesure d'écart peut être déterminée en valeur absolue.

Dans ce cas, on mesure par exemple le temps de déclenchement, notamment la durée T ou le nombre d'échantillons, pour lequel la valeur Dn de signal de comparaison 59 à un instant n est supérieure au seuil S. La détection d'obstacle est déclenchée après un temps de déclenchement prédéfini.

Bien que l'invention ait été décrite en liaison avec des exemples particuliers de réalisation, il est bien évident qu'elle n'y est nullement limitée et qu'elle comprend tous les équivalents techniques des étapes de procédé et des moyens décrits ainsi que leurs combinaisons.

Les modes de réalisation et les variantes mentionnés peuvent combinés pour générer d'autres modes de réalisation de l'invention comme définis par les revendications suivantes.

## Revendications

1. Procédé de détection d'un obstacle s'opposant au mouvement d'un écran (2) dans une installation domotique (100) de fermeture ou de protection solaire comprenant un actionneur électromécanique (11) pour l'entrainement du mouvement de l'écran (2), l'actionneur électromécanique (11) comprenant un support de couple (21), un carter (17), un arbre de sortie (20), un moteur électrique (16) comprenant un stator (32) et un rotor (34), l'installation (100) comprenant un arbre d'enroulement (4) entraînant l'écran (2) en rotation et un accessoire de liaison (30) entre l'arbre de sortie (20) de l'actionneur électromécanique (11) et l'arbre d'enroulement (4), le procédé comprenant les étapes suivantes :
- (E101) détermination d'une valeur de déplacement angulaire (Dθ) du rotor (34) par rapport au stator (32) de l'actionneur électromécanique (11),
- (E103) détermination d'une valeur de déplacement angulaire (DΦ) de l'arbre d'enroulement (4) par rapport au carter (17) ou au support de couple (21) de l'actionneur électromécanique (11),
- (E107) détermination d'une déformation angulaire (DA) de la chaîne cinématique entre le moteur électrique (16) et l'arbre d'enroulement (4) par comparaison entre ces deux valeurs de déplacement angulaire,
- (E109) détermination de la présence d'un obstacle au mouvement de l'écran (2) à partir d'une déformation angulaire supérieure à une valeur prédéfinie (VS) de déformation angulaire.

2. Procédé selon la revendication 1, **caractérisé en ce qu'**il comprend une étape (E105) de conversion
(a) de la valeur de déplacement angulaire (Dθ) du rotor (34) en une donnée de déplacement angulaire équivalente de l'arbre d'enroulement (4) ou
(b) de la valeur de déplacement angulaire (DΦ) de l'arbre d'enroulement (4) par rapport au carter (17) ou au support de couple (21) de l'actionneur électromécanique (11) en une donnée de déplacement angulaire équivalente du rotor (34).

3. Procédé selon la revendication précédente, **caractérisé en ce que** la donnée de déplacement angulaire équivalente est obtenue en divisant la valeur de déplacement angulaire (Dθ) du rotor (34) par le rapport de réduction théorique (R19) d'un réducteur (19) de l'actionneur électromécanique (11), le rapport de réduction étant un nombre supérieur à 1, ou inversement en multipliant la valeur de déplacement angulaire (DΦ) de l'arbre d'enroulement (4) par le rapport de réduction théorique du réducteur (19) de l'actionneur électromécanique (11).

4. Procédé selon l'une des revendications 3 ou 4, **caractérisé en ce qu'**il comprend une étape (E109) de traitement et de filtrage d'un signal de comparaison (59) obtenu à partir du signal (54) de déplacement angulaire du rotor (34) et du signal (56) de déplacement angulaire de l'arbre d'enroulement (4).

5. Procédé selon l'une des revendications précédentes, **caractérisé en ce qu'**il comprend une étape d'apprentissage (E100) de la valeur prédéfinie (VS) de déformation angulaire en fonction de données d'écart de déformation angulaire et/ou de temps de déclenchement de ces écarts mesurés lors d'un cycle d'apprentissage.

6. Procédé selon l'une des revendications précédentes, dans lequel l'arrivée dans des positions extrêmes de l'écran (2) est gérée par comparaison de la valeur de déplacement angulaire (DΦ) de l'arbre d'enroulement (4) par rapport à une valeur de déplacement prédéfinie.

7. Actionneur électromécanique (11) comprenant un support de couple (21), un carter (17), un moteur électrique (16) comprenant un stator (32) et un rotor (34) et un arbre de sortie (20), en prise en rotation avec un arbre d'enroulement (4) par l'intermédiaire d'un accessoire de liaison (30), l'actionneur électromécanique (11) étant **caractérisé en ce qu'**il comprend en outre un premier dispositif de détection de position (36), adapté à définir une position angulaire du rotor (34) et un deuxième dispositif de détection de position (38), adapté à définir une position angulaire de l'arbre d'enroulement (4) en prise en rotation avec l'arbre de sortie (20) et une unité électronique de contrôle (15) adaptée à traiter les données issues des deux dispositifs de détection de position (36, 38) de sorte à mettre en oeuvre le procédé selon l'une des revendications précédentes.

8. Actionneur électromécanique (11) selon la revendication précédente, **caractérisé en ce que** l'arbre d'enroulement (4) est un tube d'enroulement dans lequel est inséré au moins partiellement l'actionneur électromécanique (11), celui-ci comprenant une couronne-palier (31) en rotation autour du carter (17) par rapport au support de couple (21) et en prise en rotation avec le tube d'enroulement (4), le deuxième dispositif de détection de position (38) étant adapté à déterminer la rotation de la couronne-palier (31) par rapport au support de couple (21) de l'actionneur électromécanique.

9. Actionneur électromécanique (11) selon la revendication précédente, **caractérisé en ce que** la couronne-palier (31) comprend au moins deux secteurs magnétiques (40) répartis régulièrement sur un pourtour ou une face en vis à vis d'un dispositif de capteur magnétique (64) disposé dans le carter (17) de l'actionneur électromagnétique (11).

10. Actionneur électromécanique (11) selon l'une des revendications 7 à 9, **caractérisé en ce qu'**il comprend un élément de déformation (70) placé sur la chaîne cinématique entre le rotor (34) et l'arbre d'enroulement (4), comprenant une partie amont (120 ; 220 ; 320) et une partie aval (140 ; 240 ; 340) mobiles en rotation l'une par rapport à l'autre et comprenant un dispositif élastique (160 ; 260 ; 360) s'opposant au mouvement de rotation des parties amont (120 ; 220 ; 320) et aval (140 ; 240 ; 340).

11. Actionneur électromécanique (11) selon la revendication précédente, **caractérisé en ce que** le dispositif élastique (70) comprend une barre de torsion (260 ; 360).

12. Actionneur électromécanique (11) selon la revendication précédente, **caractérisé en ce que** le dispositif élastique (70) comprend une tige centrale (263, 363) et deux pignons (284, 294 ; 361, 362) rapportés aux extrémités (261, 262 ; 363A, 363B) de la tige centrale et en prise avec des dentures internes (223, 247 ; 321, 342) des parties amont (220, 320) et aval (240, 340).

13. Actionneur électromécanique (11) selon l'une des revendications 7 à 12, **caractérisé en ce qu'**il comprend un moteur électrique (16) synchrone à aimants permanents, à commutation électronique.

14. Actionneur électromécanique (11) selon l'une des revendications 7 à 13, **caractérisé en ce que** seul le deuxième dispositif de détection (38), parmi les deux dispositifs de détection de position angulaire (36, 38) comprend un dispositif de capteurs (64) physiques, notamment des capteurs magnétiques, pour la détermination de la position angulaire.

15. Installation (100) de fermeture ou de protection solaire comprenant un écran (2), un arbre d'enroulement (4) et un actionneur électromécanique (11) en prise en rotation avec l'arbre d'enroulement (4), l'actionneur électromécanique (11) étant conforme à l'une des revendications 7 à 14.

## Patentansprüche

1. Verfahren zum Erkennen eines Hindernisses, das der Bewegung eines Schirms (2) in einer Hausautomatisierungsanlage (100) zum Schließen oder zum Sonnenschutz entgegensteht, die einen elektromechanischen Aktuator (11) umfasst, der die Bewegung eines Schirms (2) antreibt, wobei der elektromechanische Aktuator (11) eine Drehmomentstütze (21), ein Gehäuse (17), eine Abtriebswelle (20), einen Elektromotor (16) mit einem Stator (32) und einem Rotor (34) umfasst, wobei die Anlage (100) eine Wickelwelle (4) umfasst, die den Schirm (2) in Rotation versetzt, und ein Verbindungszubehör (30) zwischen der Abtriebswelle (20) des elektromechanischen Aktuators (11) und der Wickelwelle (4), wobei das Verfahren die folgenden Schritte umfasst:
- (E101) Bestimmen eines Wertes für die Winkelverschiebung (Dθ) des Rotors (34) in Bezug auf den Stator (32) des elektromechanischen Aktuators (11),
- (E103) Bestimmen eines Wertes für die Winkelverschiebung (DΦ) der Wickelwelle (4) in Bezug auf das Gehäuse (17) oder die Drehmomentstütze (21) des elektromechanischen Aktuators (11),
- (E107) Bestimmen einer Winkelverformung (DA) des Antriebsstrangs zwischen dem Elektromotor (16) und der Wickelwelle (4) durch Vergleich zwischen diesen beiden Werten der Winkelverschiebung,
- (E109) Bestimmen des Vorhandenseins eines Hindernisses für die Bewegung des Schirms (2) aus einer Winkelverformung, die größer als ein vordefinierter Wert (VS) der Winkelverformung ist.

2. Verfahren nach Anspruch 1, **dadurch gekennzeichnet, dass** es mindestens einen Schritt (E105) zur Umwandlung von Folgendem umfasst:
(a) des Wertes der Winkelverschiebung (Dθ) des Rotors (34) in eine äquivalente Winkelverschiebungsangabe der Wickelwelle (4) oder
(b) des Wertes der Winkelverschiebung (DΦ) der Wickelwelle (4) in Bezug auf das Gehäuse (17) oder die Drehmomentstütze (21) des elektromechanischen Aktuators (11) in eine äquivalente Winkelverschiebungsangabe des Rotors (34).

3. Verfahren nach dem vorhergehenden Anspruch, **dadurch gekennzeichnet, dass** die äquivalente Winkelverschiebungsangabe erhalten wird, indem der Wert der Winkelverschiebung (Dθ) des Rotors (34) durch das theoretische Übersetzungsverhältnis (R19) eines Getriebes (19) des elektromechanischen Aktuators (11) geteilt wird, wobei das Übersetzungsverhältnis eine Zahl größer als 1 ist, oder umgekehrt durch Multiplizieren des Winkelverschiebungswertes (DΦ) der Wickelwelle (4) mit dem theoretischen Untersetzungsverhältnis des Getriebes (19) des elektromechanischen Aktuators (11).

4. Verfahren nach einem der Ansprüche 3 oder 4, **dadurch gekennzeichnet, dass** es einen Schritt (E109) des Verarbeitens und Filterns eines Vergleichssignals (59) umfasst, das aus dem Signal (54) der Winkelverschiebung des Rotors (34) und dem Signal (56) der Winkelverschiebung der Wickelwelle (4) erhalten wird.

5. Verfahren nach einem der vorhergehenden Ansprüche, **dadurch gekennzeichnet, dass** es einen Schritt des Lernens (E100) des vordefinierten Werts (VS) der Winkelverformung in Abhängigkeit von Daten der Winkelverformungsabweichung und/oder der Auslösezeit dieser Abweichungen umfasst, die während eines Lernzyklus gemessen wurden.

6. Verfahren nach einem der vorhergehenden Ansprüche, bei dem das Erreichen extremer Positionen des Schirms (2) durch Vergleich des Wertes der Winkelverschiebung (DΦ) der Wickelwelle (4) mit einem vordefinierten Verschiebungswert verwaltet wird.

7. Elektromechanischer Aktuator (11) mit einer Drehmomentstütze (21), einem Gehäuse (17), einem Elektromotor (16) mit einem Stator (32) und einem Rotor (34) und einer Abtriebswelle (20), die über ein Verbindungszubehör (30) mit einer Wickelwelle (4) in Drehungseingriff steht, wobei der elektromechanische Aktuator (11) **dadurch gekennzeichnet ist, dass** er ferner eine erste Positionserfassungsvorrichtung (36) umfasst, die dazu geeignet ist, eine Winkelposition des Rotors (34) zu bestimmen, und eine zweite Positionserfassungsvorrichtung (38), die dazu geeignet ist, eine Winkelposition der Wickelwelle (4) zu bestimmen, die mit der Abtriebswelle (20) in Drehungseingriff steht, und eine elektronische Steuereinheit (15), die dazu ausgelegt ist, die von den beiden Positionserfassungsvorrichtungen (36, 38) stammenden Daten so zu verarbeiten, dass das Verfahren nach einem der vorhergehenden Ansprüche durchgeführt wird.

8. Elektromechanischer Aktuator (11) nach dem vorhergehenden Anspruch, **dadurch gekennzeichnet, dass** die Wickelwelle (4) ein Wickelrohr ist, in das der elektromechanische Aktuator (11) zumindest teilweise eingesetzt ist, wobei dieser einen Lagerkranz (31) umfasst, der um das Gehäuse (17) in Bezug auf die Drehmomentstütze (21) drehbar ist und mit dem Wickelrohr (4) in Drehungseingriff steht, wobei die zweite Positionserfassungsvorrichtung (38) dazu ausgelegt ist, die Drehung des Lagerkranzes (31) in Bezug auf die Drehmomentstütze (21) des elektromechanischen Aktuators zu bestimmen.

9. Elektromechanischer Aktuator (11) nach dem vorhergehenden Anspruch, **dadurch gekennzeichnet, dass** der Lagerkranz (31) mindestens zwei magnetische Sektoren (40) umfasst, die regelmäßig auf einem Umfang oder einer Fläche verteilt sind, die einer in dem Gehäuse (17) des elektromagnetischen Aktuators (11) angeordneten Magnetsensorvorrichtung (64) gegenüberliegt.

10. Elektromechanischer Aktuator (11) nach einem der Ansprüche 7 bis 9, **dadurch gekennzeichnet, dass** er ein Verformungselement (70) umfasst, das im Antriebsstrang zwischen dem Rotor (34) und der Wickelwelle (4) angeordnet ist und einen stromaufwärtigen Teil (120; 220; 320) und einem stromabwärtigen Teil (140; 240; 340), die relativ zueinander drehbar sind und eine elastische Vorrichtung (160; 260; 360) umfasst, die der Drehbewegung des stromaufwärtigen (120; 220; 320) und des stromabwärtigen (140; 240; 340) Teils entgegenwirkt.

11. Elektromechanischer Aktuator (11) nach dem vorhergehenden Anspruch, **dadurch gekennzeichnet, dass** die elastische Vorrichtung (70) einen Torsionsstab (260; 360) umfasst.

12. Elektromechanischer Aktuator (11) nach dem vorhergehenden Anspruch, **dadurch gekennzeichnet, dass** die elastische Vorrichtung (70) eine zentrale Stange (263, 363) und zwei Ritzel (284, 294; 361, 362) umfasst, die an den Enden (261, 262; 363A, 363B) der zentralen Stange angebracht sind und mit Innenverzahnungen (223, 247; 321, 342) der stromaufwärts (220, 320) und stromabwärts (240, 340) gelegenen Teile in Eingriff stehen.

13. Elektromechanischer Aktuator (11) nach einem der Ansprüche 7 bis 12, **dadurch gekennzeichnet, dass** er einen elektronisch kommutierten Permanentmagnet-Synchron-Elektromotor (16) umfasst.

14. Elektromechanischer Aktuator (11) nach einem der Ansprüche 7 bis 13, **dadurch gekennzeichnet, dass** nur die zweite Erfassungseinrichtung (38) von den beiden Winkelstellungserfassungseinrichtungen (36, 38) eine physikalische Sensoreinrichtung (64), insbesondere Magnetsensoren zur Bestimmung der Winkelstellung umfasst.

15. Schließ- oder Sonnenschutzanlage (100) mit einem Schirm (2), einer Wickelwelle (4) und einem elektromechanischen Aktuator (11), der mit der Wickelwelle (4) in Drehungseingriff steht, wobei der elektromechanische Aktuator (11) einem der Ansprüche 7 bis 14 entspricht.

## Claims

1. A method for detecting an obstacle opposing the movement of a screen (2) in a home automation system (100) for closure or sun protection comprising an electromechanical actuator (11) for driving the movement of the screen (2), the electromechanical actuator (11) comprising a torque support (21), a housing (17), an output shaft (20), an electric motor (16) comprising a stator (32) and a rotor (34), the system (100) comprising a winding shaft (4) rotating the screen (2) and a connecting accessory (30) between the output shaft (20) of the electromechanical actuator (11) and the winding shaft (4), the method comprising the following steps:
- (E101) determining an angular displacement value (Dθ) of the rotor (34) with respect to the stator (32) of the electromechanical actuator (11),
- (E103) determining an angular displacement value (DΦ) of the winding shaft (4) relative to the housing (17) or torque support (21) of the electromechanical actuator (11),
- (E107) determining an angular deformation (DA) of the kinematic chain between the electric motor (16) and the winding shaft (4) by comparing these two angular displacement values,
- (E109) determining the presence of an obstacle to the movement of the screen (2) from an angular deformation greater than a predefined angular deformation value (VS).

2. The method according to claim 1, **characterised in that** it comprises a step (E105) of converting
(a) the angular displacement value (Dθ) of the rotor (34) into an equivalent angular displacement data of the winding shaft (4) or
(b) the angular displacement value (DΦ) of the winding shaft (4) relative to the housing (17) or torque support (21) of the electromechanical actuator (11) into an equivalent angular displacement data of the rotor (34).

3. The method according to the preceding claim, **characterised in that** the equivalent angular displacement data is obtained by dividing the angular displacement value (Dθ) of the rotor (34) by the theoretical reduction ratio (R19) of a gearbox (19) of the electromechanical actuator (11), the reduction ratio being a number greater than 1, or conversely by multiplying the angular displacement value (DΦ) of the winding shaft (4) by the theoretical reduction ratio of the gearbox (19) of the electromechanical actuator (11).

4. The method according to one of claims 3 or 4, **characterised in that** it comprises a step (E109) of processing and filtering a comparison signal (59) obtained from the angular displacement signal (54) of the rotor (34) and the angular displacement signal (56) of the winding shaft (4).

5. The method according to one of the preceding claims, **characterised in that** it comprises a step of learning (E100) the predefined angular deformation value (VS) as a function of data of angular deformation deviation and/or of triggering time of these deviations measured during a learning cycle.

6. The method according to one of the preceding claims, wherein the reaching of extreme positions by the screen (2) is managed by comparing the angular displacement value (DΦ) of the winding shaft (4) with a predefined displacement value.

7. An electromechanical actuator (11) comprising a torque support (21), a housing (17), an electric motor (16) comprising a stator (32) and a rotor (34), and an output shaft (20), rotatably engaged with a winding shaft (4) through a connecting accessory (30), the electromechanical actuator (11) being **characterised in that** it further comprises a first position detection device (36), adapted to define an angular position of the rotor (34) and a second position detection device (38), adapted to define an angular position of the winding shaft (4) in rotational engagement with the output shaft (20), and an electronic control unit (15) adapted to process the data from the two position detection devices (36, 38) so as to implement the above-mentioned method.

8. The electromechanical actuator (11) according to the preceding claim, **characterised in that** the winding shaft (4) is a winding tube in which the electromechanical actuator (11) is at least partially inserted, the latter comprising a bearing ring (31) rotating around the housing (17) with respect to the torque support (21) and in rotational engagement with the winding tube (4), the second position detection device (38) being adapted to determine the rotation of the bearing ring (31) with respect to the torque support (21) of the electromechanical actuator.

9. The electromechanical actuator (11) according to the preceding claim, **characterised in that** the bearing ring (31) comprises at least two magnetic sectors (40) distributed uniformly over a circumference or a surface opposite a magnetic sensor device (64) arranged in the housing (17) of the electromagnetic actuator (11).

10. The electromechanical actuator (11) according to any one of the claims 7 to 9, **characterised in that** it comprises a deformation element (70) placed on the kinematic chain between the rotor (34) and the winding shaft (4), comprising an upstream part (120; 220; 320) and a downstream part, (140; 240; 340) rotatable relative to each other and comprising a resilient device (160; 260; 360) opposing the rotational movement of the upstream (120; 220; 320) and downstream (140; 240; 340) parts.

11. The electromechanical actuator (11) according to the preceding claim, **characterised in that** the resilient device (70) comprises a torsion bar (260; 360).

12. The electromechanical actuator (11) according to the preceding claim, **characterised in that** the resilient device (70) comprises a central rod (263, 363) and two pinion gears (284, 294; 361, 362) attached to the ends (261, 262; 363A, 363B) of the central rod and meshing with internal teeth (223, 247; 321, 342) of the upstream (220, 320) and downstream (240, 340) parts.

13. The electromechanical actuator (11) according to any of claims 7 to 12, **characterised in that** it comprises an electronically commutated permanent magnet synchronous electric motor (16).

14. The electromechanical actuator (11) according to one of claims 7 to 13, **characterised in that** only the second detection device (38) of the two angular position detection devices (36, 38) comprises a physical sensor device (64), in particular magnetic sensors, for determining the angular position.

15. A closure or sun protection system (100) comprising a screen (2), a winding shaft (4) and an electromechanical actuator (11) in rotational engagement with the winding shaft (4), the electromechanical actuator (11) being in accordance with one of claims 7 to 14.
